**Europäisches Patentamt**

(19) **European Patent Office**

**Office européen des brevets**

(11) Veröffentlichungsnummer: **0 212 694**
**B1**

(12) # EUROPÄISCHE PATENTSCHRIFT

(45) Veröffentlichungstag der Patentschrift:
**29.03.89**

(21) Anmeldenummer: **86201083.2**

(22) Anmeldetag: **21.06.86**

(51) Int. Cl.⁴: **G 01 N 19/04**

(54) **Verfahren zur Beurteilung des Haftens der aus Kunststoff bestehenden Gleitschicht von Mehrschicht-Gleitlagerwerkstoffen.**

(30) Priorität: **13.07.85 DE 3525068**

(43) Veröffentlichungstag der Anmeldung:
**04.03.87 Patentblatt 87/10**

(45) Bekanntmachung des Hinweises auf die Patenterteilung:
**29.03.89 Patentblatt 89/13**

(84) Benannte Vertragsstaaten:
**DE FR GB IT**

(56) Entgegenhaltungen:
**FR-A-2 542 088**
**GB-A-2 121 547**
**US-A-4 491 014**

(73) Patentinhaber: **KOLBENSCHMIDT Aktiengesellschaft, Karl- Schmidt- Strasse 8/12 Postfach 1351, D-7107 Neckarsulm (DE)**

(72) Erfinder: **Baureis, Hans- Paul, Höhenweg 5, D-6909 Neckarsulm (DE)**

(74) Vertreter: **Rieger, Harald, Dr., Reuterweg 14, D-6000 Frankfurt am Main (DE)**

## Beschreibung

Die Erfindung betrifft ein Verfahren zur Beurteilung des Haftens der aus Kunststoff bestehenden Gleitschicht von Mehrschicht-Gleitlagerwerkstoffen, aufgebaut aus einer metallischen Stützschicht, vorzugsweise aus Stahl, mit einer porös aufgesinterten oder aufgespritzten 0,1 bis 1,0 mm dicken Bronzeschicht, deren in einem Walzprozeß aufgetragene Porenfüllung und einer darauf befindlichen 0,005 bis 1,0 mm dicken Gleitschicht aus Perfluorpolymerem, insbesondere Polytetrafluoräthylen, das ggf. noch die Notlaufeigenschaften verbessernde Zusätze wie Blei, Graphit, Molybdändisulfid einzeln oder zu mehreren sowie ggf. noch die Verschleißeigenschaften und Belastbarkeit verbessernde Zusätze wie Glasfasern, Kohlefasern, Glasperlen einzeln oder zu mehreren, enthält.

Mehrschicht-Gleitlagerwerkstoffe stellen eine Kombination zwischen einer metallischen Stützschicht und einer aus Kunststoff bestehenden Gleitschicht dar, wobei in aller Regel zwischen der Gleitschicht und der metallischen Stützschicht eine 0,1 bis 0,5 mm dicke Bronzeschicht - Zinn- oder Zinnbleibronze - porös aufgesintert oder aufgespritzt ist. Die Füllung der Poren der Bronzeschicht und die auf der Bronzeschicht befindliche 0,01 bis 0,5 mm dicke Gleitschicht bestehen u.a. aus Polymerem, bevorzugt aus Polytetrafluoräthylen, das ggf. die Gleiteigenschaften verbessernden Zusätzen wie Blei, Molybdändisulfid und/oder Graphit in einer Menge von 5 bis 40 Gew.-% enthält. Gegebenenfalls können die Verschleißeigenschaft und Belastbarkeit durch Zusätze von Glasfasern, Kohlefasern und/oder Glasperlen in einer Menge von 5 bis 40 % verbessert werden. Die poröse Bronzeschicht sichert eine sehr gute Haftung für den jeweils verwendeten Kunststoff zur metallischen Stützschicht. Die Verbindung mit der metallischen Stützschicht garantiert, daß die aus dem Mehrschicht-Gleitlagerwerkstoff hergestellten Gleitlagerelemente hinsichtlich Preßsitz, elastischer Eigenschaften und Wärmeausdehnung den aus metallischen Mehrschicht-Gleitlagerwerkstoffen gefertigten Gleitlagerelementen sehr ähnlich sind und daher auch in dünnwandiger Ausführung gut eingesetzt werden können. Gegenüber massiven Kunststoff-Gleitlagerwerkstoffen haben die Mehrschicht-Gleitlagerwerkstoffe mit einer aus Kunststoff bestehenden Gleitschicht den Vorteil erhöhter Wärmeleitfähigkeit und Festigkeit. Die aus diesem Mehrschicht-Gleitlagerwerkstoff hergestellten Gleitlagerelemente sind im allgemeinen relativ hoch bis ca. 150 N/mm² belastbar. Die ursprünglich für Trockenlauf konzipierten Mehrschicht-Gleitlagerwerkstoffe des eingangs beschriebenen Aufbaus werden heute infolge ihrer hervorragenden Gleitlagereigenschaften auch im Bereich der Mischreibung sowie unter hydrodynamischen Schmierbedingungen eingesetzt. Dementsprechend ist ihr Anwendungsbereich breit gestreut, so finden die aus einem solchen Gleitlagerwerkstoff hergestellten Gleitlagerelemente beispielsweise Anwendung im Maschinen-, Kraftfahrzeug-, Flugzeug- und Apparatebau sowie in der Elektroindustrie Anwendung. Es ist deshalb erforderlich, daß die Gesamtheit von Eigenschaften und Merkmalen der Mehrschicht-Gleitlagerwerkstoffe, die sich auf deren Eignung zur Erfüllung gegebener Erfordernisse beziehen, durch ein umfangreiches Qualitätssicherungssystem gewährleistet wird. Eines der wichtigsten die Qualität des Gleitlagerwerkstoffs charakterisierenden Merkmale ist die Haftfestigkeit der auf der porösen Bronzeschicht befindlichen aus Kunststoff bestehenden Gleitschicht.

Zur Beurteilung des Haftens der aus Kunststoff bestehenden Gleitschicht wird bis heute die Gitterschnittprüfung von Anstrichen gemäß DIN 53 151 herangezogen. Dabei wird bei einer aus dem Gleitlagerwerkstoff entnommenen Probe mit einem Mehrschneidengerät mit sechs Schneiden von 1 bzw. 2 mm Schneidenabstand ein bis auf die Bronzeschicht durchgehendes Schnittband mit sechs Schnitten und im rechten Winkel dazu ein weiteres Schnittband mit sechs Schnitten gezogen, so daß ein Gitter mit 25 Quadraten entsteht. Nach dem Herstellen des Gitterschnittes wird mit der Handbürste über die Gitterschnittfelder in beiden diagonalen Richtungen mit leichtem Druck je fünfmal hin und her gebürstet. Durch die Betrachtung der Gitterschnitte mit der Lupe und ihren Vergleich mit den Bildern und Beschreibungen nach einer Auswertungstabelle wird ein Gitterschnitt-Kennwert ermittelt, durch den die Haftfestigkeit der Gleitschicht charakterisierbar ist. Der Nachteil der Gitterschnittprüfung besteht darin, daß sich Fehlbeurteilungen nicht vermeiden lassen.

Aus GB-A-2 121 547 ist ferner bekannt eine extra gegossene Form zu verwenden, die auf der Oberfläche eines aus mehreren Schichten von Legierungen bestehenden Prüflings haftet. Mit Hilfe der Form wird die Zugfestigkeit der Schichten bestimmt. Gemäß FR-A-2 542 388 wird dazu ein an die Prüflingsoberfläche geklebter Stempel verwendet, wobei die Verklebung z. B. zwischen Beton und einer darauf aufgebrachten Schicht geprüft wird.

Aufgabe der vorliegenden Erfindung ist es, ein Prüfverfahren zur Beurteilung des Haftens der Gleitschicht auf der Bronzeschicht bei den eingangs beschriebenen Mehrschicht-Gleitlagerwerkstoffen zu finden, mit dem Fehlbeurteilungen nahezu vollständig ausgeschlossen sind.

Gelöst ist diese Aufgabe dadurch, daß die Oberfläche der Gleitschicht einer aus dem Mehrschicht-Gleitlagerwerkstoff ausgestanzten Probe erst mechanisch und dann chemisch aktiviert und nach dem Spülen und Trocknen der Probe mit der mechanisch aufgerauhten Stirnfläche des aus Stahl bestehenden Prüfstempels einer Testeinrichtung nach ISO 4624 verklebt, nach dem Aushärten des Klebstoffes die Gleitschicht am Außenumfang des Prüfstempels bis auf die Bronzeschicht durchtrennt und dann die Zugfestigkeit der Gleitschicht, die erforderlich ist, um die Gleitschicht senkrecht von der Bronzeschicht abzutrennen, nach ISO 4624 bestimmt wird.

Im Rahmen der vorzugsweisen Ausgestaltung des erfindungsgemäßen Verfahrens wird die Oberfläche der Gleitschicht der ausgestanzten Probe durch mehrmaliges, vorzugsweise drei- bis zehnmaliges, Hin- und Herbewegen eines Schleifmittels unter leichtem Druck in zwei senkrecht zueinander verlaufenden Richtungen, aufgerauht.

Nach einem weiteren Merkmal des Verfahrens wird die Oberfläche der Gleitschicht der ausgestanzten Probe durch 0,5 bis 5 min dauerndes Eintauchen der Probe in eine für Perfluorpolymere geeignete Ätzlösung aktiviert.

Zweckmäßigerweise wird als Ätzsystem eine Lösung aus flüssigen Ammoniak und Natrium nach DE-AS 1 260 778 oder aus Tetrahydrofuran mit Natrium und Naphthalin gemäß DE-PS 1 016 869 verwendet.

Die Beanspruchungsgeschwindigkeit bei der Bestimmung der Zugfestigkeit beträgt 0,05 bis 0,5 mm/s.

Für den Fall des Vorhandenseins von metallischen Partikeln in der Gleihschicht ist eine Entmetallisierung der Oberfläche der Gleitschicht mittels einer wäßrigen Lösung aus Essigsäure und Wasserstoffperoxid angebracht.

Die Vorrichtung zur Durchführung des erfindungsgemäßen Verfahrens besteht gemäß ISO 4624 aus einem Maschinengestell mit einem kugelgelagerten Einspannteil für den Prüfstempel und einer kugelgelagerten Kugelschale, auf deren als Widerlager dienendem Rand der Rand der Probe auflegbar ist.

Die Erfindung ist nachfolgend anhand eines Ausführungsbeispiels näher erläutert:

Auf einer Stahlstützschicht ist eine 0,3 mm dicke Bronzeschicht aus Zinnbleibronze porös aufgesintert. In einem Walzprozeß sind die Poren der Bronzeschicht mit einem Gemisch aus Polytetrafluoräthylen und 20 % Blei vollständig ausgefüllt, wobei über der Bronzeschicht eine 0,02 mm dicke Gleitschicht des Polytetrafluoräthylen-Blei-Gemisches vorhanden ist. Aus dem bandförmigen Mehrschicht-Gleitlagerwerkstoff wurden Proben mit einem Durchmesser von 20 mm ausgestanzt und anschließend auf einem Kniehebelpresse plangerichtet. Dann wurde die Oberfläche der Gleitschicht durch fünfmaliges Hin- und Herbewegen eines Schleifpapiers unter leichtem Druck in zwei senkrecht zueinander verlaufenden Richtungen aufgerauht und in einer wäßrigen Lösung aus Essigsäure und Wasserstoffperoxid entbleit und danach in einer Ätzlösung von in Tetrahydrofuran gelöstem Naphthalin und Natrium 2 min chemisch aktiviert. Nach dem Trocknen der Probe wurde die Gleitfläche mit der aufgerauhten Stirnfläche des einen Durchmesser von 10 mm aufweisenden Prüfstempels einer Testvorrichtung nach ISO 4624 verklebt. Nach dem Aushärten des Klebers wurden die Gleitschicht um den Außendurchmesser des Prüfstempels herum bis auf die poröse Bronzeschicht durchtrennt, der Prüfstempel in das kugelgelagerte Einspannteil der Testeinrichtung gemäß ISO 4624 eingespannt und die Proben mit ihrem über den Durchmesser des Prüfstempels hinausragenden Rand auf den als Widerlager dienenden Rand einer kugelgelagerten Kugelschale aufgelegt und die Zugfestigkeit bestimmt. Die Beanspruchungsgeschwindigkeit betrug 0,2 mm/s und die maximale Zugkraft im Kraftmeßbereich 1.500 N. Die Zugfestigkeit in $N/mm^2$ errechnet sich durch die Gleichung

$$A = \frac{4 \cdot F}{\pi \cdot d^2}$$

F = Zugkraft in N
d = Durchmesser des Prüfstempels in mm

Für den verwendeten Prüfstempeldurchmesser von 10 mm ist die Zugfestigkeit durch die Gleichung

$$A = \frac{F}{78,54} \ N/mm^2$$

gegeben.

Neben der Bestimmung der Zugfestigkeit erfolgt eine Beurteilung nach folgendem Schema:

A: Bruch zwischen Gleitschicht und Sintergerüst. Auf der Prüfstempelfläche erkennt man die samtartige Gleitschicht und auf der Probe die reine Bronzeschicht.

B: Bruch innerhalb der Gleitschicht. Sowohl auf der Prüfstempelfläche als auch auf der Probe ist der Kunststoff der Gleitschicht sichtbar.

-/Y: Bruch zwischen der Gleitschicht und dem Kleber.

Y: Bruch innerhalb des Klebers.

Y/Z: Bruch zwischen Kleber und Prüfstempel.

Bei der Bestimmung der Zugfestigkeit ergab sich eine Zugfestigkeit von 3,0 $N/mm^2$. Die Überprüfung der beiden Trennflächen zeigte, daß etwa 80 % der Prüfstempelfläche einen Bruch zwischen der Gleitschicht und der Bronzeschicht aufweist und 20 % einen Bruch zwischen der Gleitschicht und dem Kleber. Daraus ergibt sich folgendes Ergebnis: 3,0 $N/mm^2$, 80 % A, 20 %-/Y.

**Patentansprüche**

1. Verfahren zur Beurteilung des Haftens der aus Kunststoff bestehenden Gleitschicht von Mehrschicht-Gleitlagerwerkstoffen, aufgebaut aus einer metallischen Stützschicht, vorzugsweise aus Stahl, mit einer porös aufgesinterten oder aufgespritzten 0,1 bis 1,0 mm dicken Bronzeschicht, deren in einem Walzprozeß aufgetragenen Porenfüllung und einer darauf befindlichen 0,005 bis 1,0 mm dicken Gleitschicht aus Perfluorpolymerem, insbesondere Polytetrafluoräthylen, das ggf. noch die Notlaufeigenschaften verbessernde Zusätze wie Blei, Graphit, Molybdändisulfid einzeln oder zu mehreren sowie ggf. noch die Verschleißeigenschaften und Belastbarkeit verbessernde Zusätze wie Glasfasern, Kohlefasern, Glasperlen einzeln oder zu mehreren, enthält, dadurch gekennzeichnet, daß die Oberfläche der Gleitschicht einer aus dem Mehrschicht-Gleitlagerwerkstoff ausgestanzten Probe erst mechanisch und dann chemisch aktiviert und nach dem Spülen und Trocknen der Probe mit der mechanisch aufgerauhten Stirnfläche des aus Stahl bestehenden Prüfstempels einer Testeinrichtung nach ISO 4624 verklebt, nach dem Aushärten des Klebstoffs die Gleitschicht am Außenumfang des Prüfstempels bis auf die poröse Bronzeschicht durchtrennt und dann die Zugfestigkeit der Gleitschicht nach ISO 4624 bestimmt wird.

2. Verfahren nach Anspruch 1, dadurch gekennzeichnet, daß die Oberfläche der Gleitschicht der ausgestanzten Probe durch mehrmaliges, vorzugsweise 3 bis 10-maliges, Hin- und Herbewegen eines Schleifmittels unter leichtem Druck in zwei senkrecht zueinander verlaufenden Richtungen aufgerauht wird.

3. Verfahren nach den Ansprüchen 1 und 2, dadurch gekennzeichnet, daß die Oberfläche der Gleitschicht der ausgestanzten Probe durch ein 0,5 bis 5 min dauerndes Eintauchen der Probe in eine für Perfluorpolymere geeignete Ätzlösung aktiviert wird.

4. Verfahren nach Ansptuch 3, dadurch gekennzeichnet, daß als Ätzsystem eine Lösung aus flüssigem Ammoniak und Natrium oder eine Lösung aus Tetrahydrofuran mit Naphthalin und Natrium verwendet wird.

5. Verfahren nach den Ansprüchen 1 bis 4, dadurch gekennzeichnet, daß die Beanspruchungsgeschwindigkeit bei der Bestimmung der Zugfestigkeit 0,05 bis 0,5 mm/s beträgt.

6. Verfahren nach den Ansprüchen 1 und 2, dadurch gekennzeichnet, daß bei Vorhandensein von Metall in der Gleitschicht die Probe durch Eintauchen in eine wäßrige Lösung aus Essigsäure und Wasserstoffperoxid entmetallisiert witd.

## Claims

1. Method of evaluating the adhesion of the plastic sliding layer of laminate materials for sliding surface bearings, made up of a metallic backing layer consisting preferably of steel, with a sintered or sprayed-on porous bronze layer having a thickness of 0.1 to 1.0 mm, the pore filler thereof, which is applied in a rolling process, and a sliding layer having a thickness of 0.005 to 1.0 mm arranged thereon and made of perfluoro polymers, particularly polytetrafluoroethylene, which may also contain additives for improving the emergency running properties, such as lead, graphite, molybdenum disulphide, individually or in combination, and, if desired, also additives for improving the wearing properties and the load-carrying capacity, such as glass fibres, carbon fibres, glass beads, individually or in combination, characterized in that the surface of the sliding layer of a sample blanked from the laminate material for sliding surface bearings is first mechanically and then chemically activated and after rinsing and drying of the sample, it is adhesively joined to the mechanically roughened end face of the steel testing bar of a testing apparatus in accordance with ISO Standard 4624, when the adhesive has cured, the sliding layer is severed at the outside periphery of the testing bar as far as the bronze layer, and the ultimate tensile stress of the sliding layer is then determined in accordance with ISO Standard 4624.

2. Method according to Claim 1, characterized in that the surface of the sliding layer of the blanked sample is roughened by moving an abrasive back and forth under light pressure several times, preferably 3 to 10 times, in two directions at right-angles to each other.

3. Method according to Claims 1 and 2, characterized in that the surface of the sliding layer of the blanked sample is activated in that the sample is dipped for 0.5 to 5 minutes into an etching solution which is suitable for perfluoro polymers.

4. Method according to Claim 3, characterized in that the etching system employed is a solution of liquid ammonia and sodium or a solution of tetrahydrofurane with naphthalene and sodium.

5. Method according to Claims 1 to 4, characterized in that the stressing speed on determining the ultimate tensile stress is 0.05 to 0.5 mm/s.

6. Method according to Claims 1 and 2, characterized in that in the presence of metal in the sliding layer the sample is demetallized by being dipped into an aqueous solution of acetic acid and hydrogen peroxide.

## Revendications

1. Procédé pour juger de l'adhérence de la couche de glissement en matière plastique de matériaux multicouches pour paliers lisses, formés d'une couche métallique d'appui, de préférence en acier, sur laquelle est déposée par frittage ou par projection une couche poreuse de bronze de 0,1 à 1,0 mm d'épaisseur, de son remplissage de pores déposé par un processus de laminage et d'une couche de glissement, de 0,005 à 1,0 mm d'épaisseur, se trouvant au-dessus et en polymère perfluoré, notamment en polytétrafluoroéthylène, qui contient éventuellement, seul ou en combinaison, des additifs améliorant les propriétés de fonctionnement exceptionnelles en cas d'urgence, comme du plomb, du graphite, du disulfure de molybdène, ainsi que, le cas échéant, des additifs améliorant les propriétés à l'usure et l'aptitude à supporter des charges, comme des fibres de verre, des fibres de carbone et des perles de verre, caractérisé en ce qu'il consiste à activer, d'abord mécaniquement, puis chimiquement, la surface de la couche de glissement d'un échantillon découpé dans le matériau à couches multiples pour palier lisse et, après le rincçage et le séchage de l'échantillon, à le coller à la surface frontale, rendue rugueuse mécaniquement, du poinçon d'essai en acier d'un dispositif d'essai suivant la norme ISO 4624, à détacher, après le durcissement de la colle la couche de glissement sur le pourtour extérieur du poinçon d'essai, jusqu'à la couche poreuse de bronze, et ensuite à déterminer la résistance à la traction de la couche de glissement suivant la norme ISO 4624.

2. Procédé suivant la revendication 1, caractérisé en ce qu'il consiste à rendre rugueuse la surface de la couche de glissement de l'échantillon découpé en y faisant passer plusieurs fois, de préférence 3 à 10 fois, un agent abrasif sous une pression légère, dans deux directions perpendiculaires entre elles.

3. Procédé suivant la revendication 1 ou 2, caractérisé en ce qu'il consiste à activer la surface de la couche de glissement de l'échantillon découpé, en le plongeant pendant 0,5 à 5 minutes dans une solution d'attaque qui convient pour des polymères perfluorés.

4. Procédé suivant la revendication 3, caractérisé en ce qu'il consiste à utiliser, comme système d'attaque, une solution d'ammoniaque liquide et de sodium ou une solution de tétrahydrofuranne, avec du naphtalène et du sodium.

5. Procédé suivant l'une des revendications 1 à 4, caractérisé en ce que la vitesse de contrainte, lors de la détermination de la résistance à la traction, est comprise entre 0,05 à 0,5 mm/seconde.

6. Procédé suivant l'une des revendications 1 ou 2, caractérisé en ce qu'il consiste, dans le cas de présence de métal dans la couche de glissement, à démétalliser l'échantillon en l'immergeant dans une solution aqueuse d'acide acétique et d'eau oxygénée.